# EUROPEAN PATENT APPLICATION

(11) **EP 4 783 330 A1**
(43) Date of publication of application: **29.07.2026**
(21) Application number: 24948549.1
(22) Date of filing: 25.12.2024
(51) Int. Cl.: H01M 50/293, H01M 50/244, H01M 50/213

(54) **BOTTOM PROTECTION PLATE SUPPORT STRUCTURE AND BATTERY PACK THEREOF**

(30) Priority: 23.07.2024 CN 202421755481 U
(71) Applicant: Eve Energy Co., Ltd., Huizhou, Guangdong 516006 (CN)
(72) Inventor: ZHANG, Guojiang, Huizhou, Guangdong 516006 (CN); QIU, Wencong, Huizhou, Guangdong 516006 (CN); XU, Yuhong, Huizhou, Guangdong 516006 (CN); JIANG, Jibing, Huizhou, Guangdong 516006 (CN)
(74) Representative: Studio Torta S.p.A.
(86) International application number: PCT/CN2024/142230
(87) International publication number: WO 2026/020729

(57) **Abstract**

The present disclosure discloses a bottom protection plate supporting structure and a battery pack therefor, where the bottom protection plate supporting structure includes a supporting plate , a bottom protection plate, and foams, the supporting plate is provided with a plurality of battery positioning holes, the foams are provided in a plurality and disposed between the supporting plate and the bottom protection plate, one end of each of the foams is fixedly connected to the bottom protection plate, an end surface of the another end of the foam is attached to the supporting plate, and the foams are configured to avoid the battery positioning holes. The foams can provide sufficient supporting to ensure the safety.

## Description

This application claims priority to Chinese Patent Application No. 202421755481.2, filed with the Chinese Patent Office on July 23, 2024, content of which is incorporated herein by reference in its entirety.

### TECHNICAL FIELD

The present disclosure relates to the field of battery technologies, and more particular to a fixing bracket, a temperature sensor assembly, and a battery module.

### BACKGROUND

**In** the related art, designing a bottom supporting structure for a battery pack often suffers from insurmountable difficulties, particularly in ensuring flatness tolerances of a supporting plate and energy absorption when the bottom is subjected to an external force impact. The gravity of the battery module acts on the supporting plate, which tends to cause deformation of the supporting plate and results in poor flatness, thereby affecting the installation accuracy of the battery module and the performance of the final product. In addition, when the bottom protection plate is impacted by an external force, without an effective buffering mechanism, the force may be transmitted directly to the battery module, causing damage.

There is currently a supporting structure in which a strip-shaped foam is provided at the bottom of a box body, where the weight of the battery module and the influence of a manufacturing error on the deformation of a supporting plate are absorbed by the strip-shaped foam, and the deformation due to gravity or external force is absorbed by slight deformation of the strip-shaped foam. However, the use of the strip-shaped foam causes interference with the position of the pressure relief valve of a cell due to a larger area occupied by the strip-shaped foam, thereby affecting the safety of the battery. In order to avoid the strip-shaped foam, it is necessary to redesign the layout of the cell or the position of the pressure relief valve or to provide other drainage channels to advance the provision of drainage channels for thermal runaway substances that may be discharged from the pressure relief valve, which may add complexity and difficulty of the designing. The use of adjustment of the pressure relief valve or addition of a drainage channel means that additional processing steps, such as drilling, installation of drainage tubes and the like, are added to a production assembly process, which not only extends the production cycle, but may also require new production equipment and tools. Addition of the processing steps directly leads to an increase in processing costs including material costs (e.g., drainage tube materials), equipment investment, and additional labor costs. Meanwhile, change of the designing may also require performing security testing and verification again and add research and development and certification costs.

### SUMMARY

**The** present disclosure provides a bottom protection plate supporting structure and a battery pack therefor, which can solve the limitation on installation of the cell caused by the strip-shaped foam.

The present disclosure provides a bottom protection plate supporting structure, including:
a supporting plate provided with a plurality of battery positioning holes;
a bottom protection plate; and
a plurality of foams disposed between the supporting plate and the bottom protection plate, where one end of each of the foams is fixedly connected to the bottom protection plate, an end surface of the another end of the foam is attached to the supporting plate, and the foams are configured to avoid the battery positioning holes.

The present disclosure further provides a battery pack, including a battery module, a box body, a box cover, and a bottom protection plate supporting structure, where the bottom protection plate is provided at the bottom of the box body, the battery module and the supporting plate are located in the box body, and the supporting plate is located between the battery module and the bottom protection plate; and the battery module includes batterys and a glue layer, where the glue layer wraps a side wall of each of the batterys, a pressure relief valve of each of the batterys is opposite to corresponding one of the battery positioning holes of the supporting plate, and the box cover is in sealed connection with the box body.

### Beneficial Effects

According to the bottom protection plate supporting structure provided in the present disclosure, the battery positioning holes provide a positioning effect for the installation of the batterys and discharge passages for the pressure relief valves of the cells, a plurality of foams are provided and configured to avoid the battery positioning holes to keep a pressure relief passage of the pressure relief valves. In addition, the foams are provided in a plurality, which can ensure that, when the foams can provide sufficient support, obstruction of the space between the supporting plate and the bottom protection plate is reduced, thereby ensuring smooth flowing of the pressure relief passage and the safety performance of a battery pack using the bottom protection plate supporting structure.

According to the battery pack provided in the present disclosure, designing of the foams is integrated in a battery pack system, so that the problem of battery self-weight and manufacturing tolerance can be effectively solved, deformation caused by the gravity of the supporting plate is absorbed by small compression deformation of the foams, flatness deviation is corrected, flatness stability of a module mounting platform is ensured, and assembly accuracy and overall performance of the system are improved. Furthermore, when the bottom is impacted by an external force, the foams act as a key energy buffering medium, disperses and absorbs the impact force, and absorbs a part of the external force by virtue of the deformation thereof, thereby greatly reducing the impact which the batterys directly bears, significantly reducing the risk of damage caused by the external force, and enhancing the impact resistance and the overall safety factor of the battery pack.

### BRIEF DESCRIPTION OF THE DRAWINGS

FIG. 1 is an exploded view of a bottom protection plate supporting structure in some implementations of the present disclosure.
FIG. 2 is a schematic diagram of a position relationship between a back surface of a supporting plate and a foam in some implementations of the present disclosure.
FIG. 3 is a schematic diagram of one arrangement of foams when battery positioning holes are arranged in a matrix configuration in some implementations of the present disclosure.
FIG. 4 is a schematic diagram of one arrangement of foams when battery positioning holes are arranged in a matrix configuration in some implementations of the present disclosure.
FIG. 5 is a schematic diagram of one arrangement of foams when battery positioning holes are arranged in a matrix configuration in some implementations of the present disclosure.
FIG. 6 is a schematic diagram of one arrangement of foams when battery positioning holes are arranged in a staggered configuration in some implementations of the present disclosure.
FIG. 7 is an exploded view of a battery pack in some implementations of the present disclosure.

### REFERENCE NUMERALS OF THE ACCOMPANYING DRAWING:

1. Supporting plate; 11. Battery positioning hole; 2. Bottom protection plate; 3. Foam; 4. Battery module; 5. Box body; and 6. Box cover.

### DETAILED DESCRIPTION

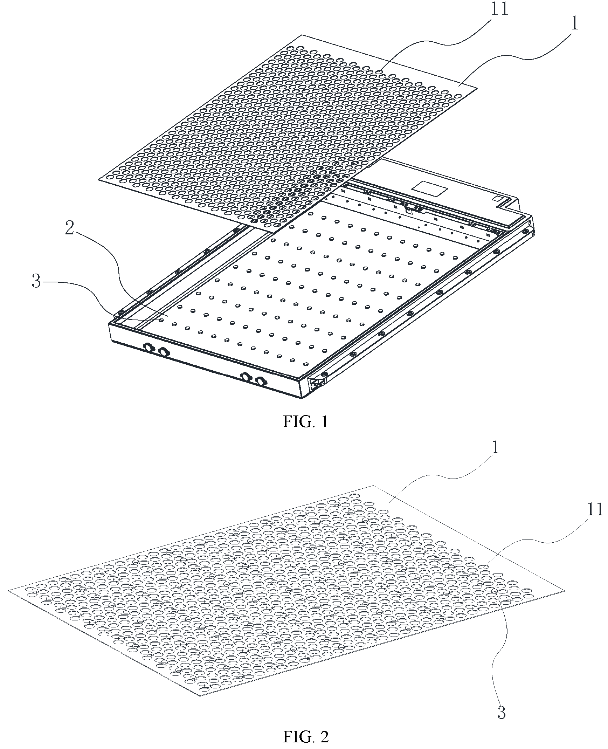

Referring to FIG. 1, the present disclosure discloses a bottom protection plate supporting structure, including a supporting plate 1, a bottom protection plate 2, and foams 3, where the supporting plate 1 is provided with a plurality of battery positioning holes 11, the foams 3 are provided in a plurality and disposed between the supporting plate 1 and the bottom protection plate 2, one end of each of the foams 3 is fixedly connected to the bottom protection plate 2, an end surface of the another end of the foam 3 is attached to the supporting plate 1, and the foams 3 are configured to avoid the battery positioning holes 11.

Specifically, the supporting plate 1 is disposed in parallel with the bottom protection plate 2, the foams 3 are arranged between the supporting plate 1 and the bottom protection plate 2, the supporting plate 1 is provided with battery positioning holes 11, the battery positioning holes 11 are configured to penetrate the supporting plate 1, the battery positioning holes 11 are used to position batterys when the batterys are installed, each of the battery positioning holes 11 corresponds to a pressure relief valve of a battery with which the battery positioning hole 11 is installed, and heat runaway substance discharged by the pressure relief valves may be discharged between the supporting plate 1 and the bottom protection plate 2 through the battery positioning holes 11, and then guided to the position of an explosion-proof valve of the box body 5. The number and position of the battery positioning holes 11 can be adjusted according to the specific battery assembling situation provided the foams 3 can be provided to avoid the battery positioning holes 11. In addition, the number and position of the foams 3 can be set and adjusted according to the specific load on the supporting plate 1 and the positions of the battery positioning holes 11. The foams 3 support the weight of the batterys assembled on the supporting plate 1 and absorb the deformation of the supporting plate 1 due to the batterys assembled on the supporting plate 1. The foams 3 can also absorb an external impact force that the bottom protection plate 2 may be subjected to, thereby reducing the impact directly borne by the batterys and decreasing the risk of damage to the entire battery pack by the external force. More importantly, the foams 3 are provided in a plurality, and the shape and the design volume of the foams 3 are more freely controlled, so that obstruction of the space between the supporting plate 1 and the bottom protection plate 2 by arrangement of the foams 3 can be minimized, thereby ensuring smooth flowing of the pressure relief passage and the safety performance of a battery pack using the bottom protection plate supporting structure.

Referring to FIGS. 2 to 6, in some embodiments, in order to facilitate designing of positions of the foams 3 and the battery positioning holes 11 are disposed against the supporting plate 1, and the plurality of battery positioning holes 11 are uniformly distributed around positions of the foams 3 contacting the supporting plate 1. That is, a plurality of battery positioning holes 11 are uniformly disposed around the foams 3 with the foams 3 used as midpoints. Specifically, since a main load on the supporting plate 1 is derived from the batterys assembled on the battery positioning holes 11, the weight of the batterys is also mainly concentrated at the battery positioning holes 11. By uniformly distributing a plurality of battery positioning holes 11 with the foam 3 used as the midpoint, targeted supporting can be provided for a high-load area on the supporting plate 1, that is, targeted supporting can be given to the positions of the supporting plate 1 that are prone to deformation, thereby ensuring that sufficient supporting force is provided for the supporting plate 1, preventing excessive deformation of the supporting plate 1 while absorbing deformation of the supporting plate 1 at the positions prone to deformation of the supporting plate 1, and ensuring the overall safety and stability of the batterys.

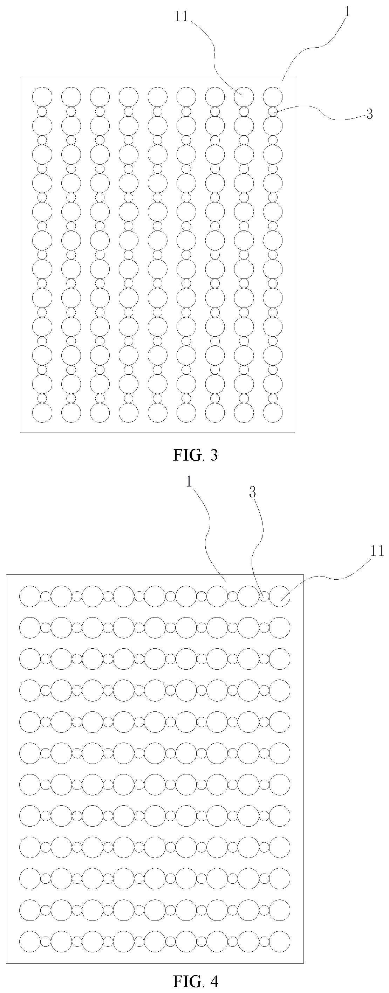

Referring to FIGS. 3-5, in some embodiments, a plurality of battery positioning holes 11 are arranged in a matrix configuration, with foams 3 uniformly distributed between adjacent two columns of battery positioning holes 11 and/or between adjacent two rows of battery positioning holes 11.

Specifically, the battery positioning holes 11 are arranged in a matrix configuration, and a specific row spacing and/or a specific column spacing can be arranged according to actual requirements. The positions of the foams 3 relative to the battery positioning holes 11 is configured, such that there are a plurality of 1×2 matrix, 2×1 matrix, and 2×1 matrix in the battery positioning holes 11 arranged in a matrix configuration.

Referring to FIG. 3, for the battery positioning holes 11 arranged in the 1×2 matrix, i.e., adjacent two battery positioning holes 11 in the same column, a foam 3 may be disposed at a position between the two battery positioning holes 11, that is, foams 3 are uniformly disposed between adjacent two columns of battery positioning holes 11.

Referring to FIG. 4, for the battery positioning holes 11 arranged in the 2×1 matrix, i.e., adjacent two battery positioning holes 11 in the same row, a foam 3 may be disposed at a position between the two battery positioning holes 11, that is, foams 3 are uniformly disposed between the adjacent two rows of battery positioning holes 11.

Use of an arrangement of the foam 3 in the 1×2 matrix and an arrangement of the foam 3 in the 2×1 matrix simultaneously is a case in which the foams 3 are uniformly provided between adjacent two columns and adjacent two rows of battery positioning holes 11.

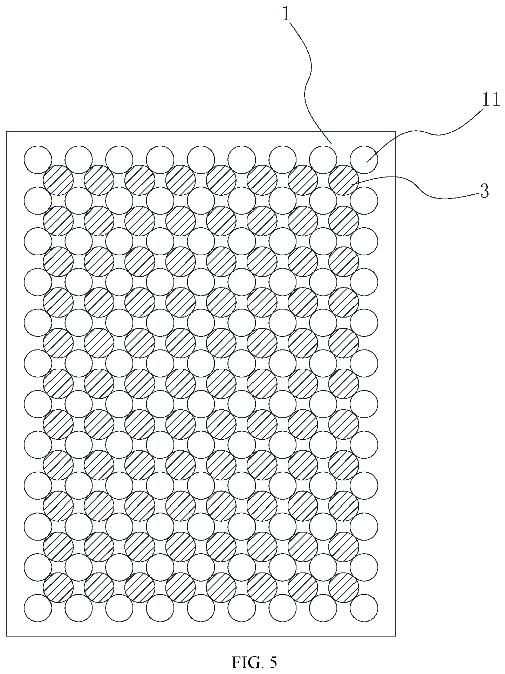

Referring to FIG. 5, for the battery positioning holes 11 arranged in the 2×2 matrix, i.e., adjacent two column of battery positioning holes 11, taking adjacent two row of battery positioning holes 11 in the 2×2 matrix of is another case in which the foams 3 are uniformly provided between adjacent two columns and adjacent two rows of battery positioning holes 11.

On the basis of the structures of the batterys positioning hole 11 arranged in the above matrix configurations, a plurality of position arrangements for uniformly arranging the foams 3 are provided, which can ensure that the distribution of the battery module 4 on the supporting plate 1 is more uniform, the weight of each of the batterys is evenly distributed, and the foams 3 is specifically arranged between columns of battery positioning holes 11 arranged in a matrix configuration and/or between rows of battery positioning holes 11 arranged in a matrix configuration, so that a stress point on the supporting plate 1 is more accurately supported, thereby effectively reducing local deformation of the supporting plate 1 caused by a concentrated load of the batterys, maximizing use of micro-deformation characteristics of the foams 3, absorbing impact caused by the weight of the battery module and installation errors thereof, and protecting the battery module 4 from damage due to vibration possibly generated in daily use, while reducing direct pressure on the supporting plate 1 and maintaining the flatness thereof.

It should be noted that the specific number of the foams 3 can be selected according to the required load and the material strength of the foams 3.

On the basis of the structures of the batterys positioning hole 11 arranged in the above matrix configurations, the foams 3 and the battery positioning holes 11 all are cylindrical, and each of the foams 3 is tangential to either two battery positioning holes 11 or four battery positioning holes 11 adjacent to the foam 3. Where the foam 3 is tangential to two battery positioning holes 11 adjacent to the foam 3, which corresponds to a case in which the foam 3 is disposed between the battery positioning holes 11 arranged in the 1×2 matrix and the 2×1 matrix, and the foam 3 is tangential to four battery positioning holes 11 adjacent to the foam 3, which corresponds to a case in which the foam 3 is disposed between the battery positioning holes 11 arranged in the 2×2 matrix.

Specifically, the battery positioning holes 11 are formed in a cylindrical design for the corresponding positioning and assembling of the cylindrical battery. Compared with the foam 3 of a rectangular or other polygonal prism, a supporting force of the foam 3 of a cylindrical design is increased by a quarter. The foam 3 is configured to be tangential to the battery positioning holes 11, so that the design of maximizing the supporting force of the foam 3 can be realized in a limited space, thereby completing the design for maximizing the supporting force of foam 3.

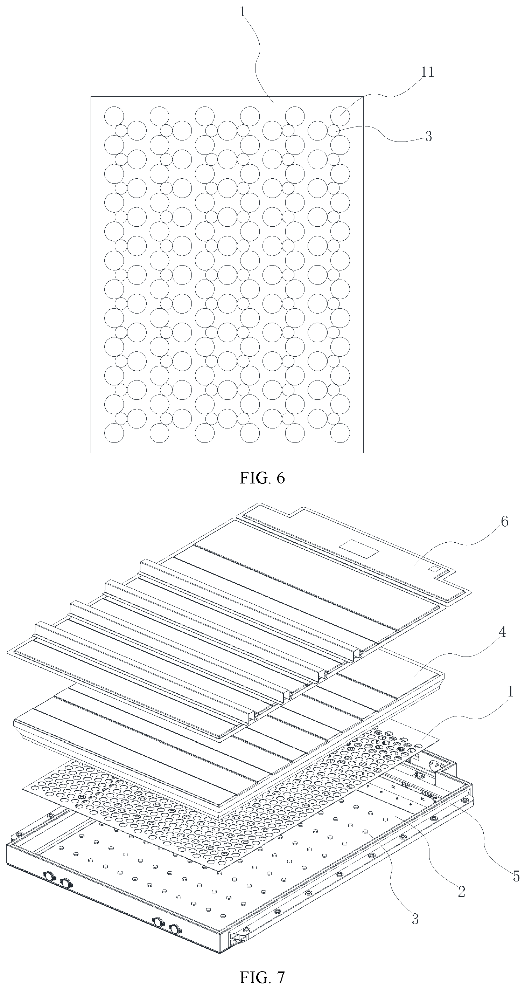

Referring to FIGS. 2 and 6, in some embodiments, the plurality of battery positioning holes 11 are arranged in a plurality of columns, and adjacent two columns of the plurality of columns of battery positioning holes 11 are arranged in a staggered configuration, where a center point of each of the battery positioning holes 11 is respectively connected to center points of two ones having a shortest distance from the battery positioning hole 11 in a column of battery positioning holes 11 adjacent to the battery positioning hole 11 to form an isosceles triangle, and respective one of the foams 3 all adjacent to three battery positioning holes 11 of the isosceles triangle is provided corresponding to a center point of the isosceles triangle. The beneficial effects the same as those of arranging the battery positioning holes 11 in a matrix configuration are not repeatedly described here. In addition, on the basis of the staggered configuration of the battery positioning holes 11, for each of the battery positioning holes 11 and two ones having a shortest distance from the battery positioning hole 11 in a column of battery positioning holes 11 adjacent to the battery positioning hole 11, center points of three battery positioning holes 11 described above can form an isosceles triangle, and the foam 3 all adjacent to the three battery positioning holes 11 is provided corresponding to a center point of the isosceles triangle, so as to ensure that the foam 3 can provide supporting to ensure uniform supporting to the supporting plate 1, thereby ensuring safety and stability of the battery.

It should be noted that the specific number of the foams 3 can be selected according to the required load and the material strength of the foams 3.

On the basis of the structure in which the above adjacent two columns of battery positioning holes 11 are arranged in a staggered configuration, and in combination with the design in which the foams 3 and the battery positioning holes 11 all are cylindrical, it is possible to make the adjacent two columns of battery positioning holes 11 more compact in design, thereby increasing the battery density. When the adjacent two columns of battery positioning holes 11 having a cylindrical shape use a more compact design, the foam 3 of a rectangular shape cannot be used to maximize the volume of the foam 3 without interfering with the battery positioning holes 11. Accordingly, the foam 3 also uses a cylindrical design. In order to improve the supporting effect of the foam 3, the foam 3 is tangential to three battery positioning holes 11 adjacent to the foam 3, so that the volume of the foam 3 can be maximized without interference with the battery positioning holes 11, thereby ensuring that the effect of designing the foam 3 is optimal.

In the present embodiment, in order to balance the absorption of the deformation of the supporting plate 1 and the bottom protection plate 2 by the foams 3 and to provide a sufficient supporting force to the supporting plate 1, the ratio of the diameter of the foam 3 to the aperture of the battery positioning hole 11 is 2:3. The design of the above ratio ensures that the foam 3 can be sufficiently deformed to absorb and dampen the weight of the battery module and the energy caused by the external impact while providing the necessary support. It is ensured that the foam 3, when absorbing energy, reduces the probability of losing sufficient supporting force due to the foam 3 reaching extreme deformation too early or being too soft, thereby achieving a good balance between protecting the battery module from damage and maintaining structural stability.

In the present embodiment, the foam 3 is made of polyurethane or polyethylene, so as to ensure the use performance of the foam 3.

Specifically, the polyurethane and the polyethylene have good mechanical properties, can effectively absorb and disperse the weight of the battery module 4 and the external impact force to ensure the stability of the supporting structure and the safety of the battery module, and have good weather resistance and temperature adaptability to ensure the stability of the performance in different environmental conditions. In addition, the foam 3 has good processability and customizability, so that the foam 3 can accurately fit the layout of the battery positioning holes 11, thereby achieving efficient assembly, and at the same time, the insulating properties of the polyurethane and the polyethylene themselves enhance the electrical safety level of the battery system.

Referring to FIG. 7, the present disclosure further provides a battery pack, including a battery module 4, a box body 5, a box cover 6, and a bottom protection plate supporting structure, where the bottom protection plate 2 is provided at the bottom of the box body 5, the battery module 4 and the supporting plate 1 are located in the box body 5, and the supporting plate 1 is located between the battery module 4 and the bottom protection plate 2; and the battery module 4 includes batterys and a glue layer, where the glue layer wraps a side wall of each of the batterys, a pressure relief valve of each of the batterys is opposite to corresponding one of the battery positioning holes 11 of the supporting plate 1, and the box cover 6 is in sealed connection with the box body 5.

Specifically, addition of the foam 3 into the system of the battery pack can effectively absorb the deformation of the supporting plate 1 due to the weight of the battery itself and the manufacturing tolerances, and the problem of poor flatness of the supporting plate 1 due to the gravity can be corrected by slight compression deformation of the foam 3, to ensure the flatness and stability of the battery module mounting platform, thereby improving the assembly accuracy of the battery module 4 and the overall system performance.

In addition, when the bottom of the battery pack is subjected to an external force impact, the foam 3 serves as an energy-absorbing medium and can disperse and absorb the impact force transmitted to the battery module. Partial impact energy is absorbed by the deformation of the foam 3 itself, so that an excessive force is prevented from directly acting on the battery, the risk of battery damage due to impact of the external force is reduced, and the impact resistance and the overall safety of the battery pack are improved.

In the present embodiment, in order to ensure the safety of the foam 3 in use, a side wall of the supporting plate 1 is disposed against an inner side wall of the box body 5. Specifically, by disposing the side wall of the supporting plate 1 against the inner side wall of the box body 5, the overall rigidity of the supporting structure can be effectively increased, thereby preventing unnecessary movement or deviation of the supporting plate 1 when subjected to external pressure or vibration and ensuring the stable installation and safe operation of the battery module 4. More importantly, it is possible to prevent the foam 3 from being inclined or bent due to the offset of the supporting plate 1, and further to prevent some secondary problems caused after the foam 3 is inclined or bent, such as plastic deformation of the foam 3, loss of efficacy of the foam 3, and the like.

## Claims

1. A bottom protection plate supporting structure, comprising:
a supporting plate (1) provided with a plurality of battery positioning holes (11);
a bottom protection plate (2); and
a plurality of foams (3) disposed between the supporting plate (1) and the bottom protection plate (2), wherein one end of each of the foams (3) is fixedly connected to the bottom protection plate (2), an end surface of the another end of the foam (3) is attached to the supporting plate (1), and the foams (3) are configured to avoid the battery positioning holes (11).

2. The bottom protection plate supporting structure of claim 1, wherein the plurality of foam (3) are disposed against the supporting plate (1), and the plurality of battery positioning holes (11) are uniformly distributed around positions of the foams (3) contacting the supporting plate (1).

3. The bottom protection plate supporting structure of claim 1 or 2, wherein the plurality of battery positioning holes (11) are arranged in a matrix configuration, and each of the foams (3) is uniformly arranged between adjacent two columns of battery positioning holes (11).

4. The bottom protection plate supporting structure of claim 1 or 2, wherein the plurality of battery positioning holes (11) are arranged in a matrix configuration, and each of the foams (3) is uniformly arranged between adjacent two rows of battery positioning holes (11).

5. The bottom protection plate supporting structure of any one of claims 1-4, wherein the foams (3) and the battery positioning holes (11) all are cylindrical.

6. The bottom protection plate supporting structure of claim 5, wherein an outer peripheral surface of each of the foams (3) is tangential to an outer peripheral surface of each of two ones of the battery positioning holes (11) adjacent to the foam (3).

7. The bottom protection plate supporting structure of claim 5, wherein an outer peripheral surface of each of the foams (3) is tangential to an outer peripheral surface of each of four ones of the battery positioning holes (11) adjacent to the foam (3).

8. The bottom protection plate supporting structure of any one of claims 1-7, wherein the plurality of battery positioning holes (11) are arranged in a plurality of columns, and adjacent two columns of the plurality of columns of battery positioning holes (11) are arranged in a staggered configuration.

9. The bottom protection plate supporting structure of claim 8, wherein a center point of each of the battery positioning holes (11) is respectively connected to center points of two ones having a shortest distance from the battery positioning hole (11) in a column of battery positioning holes (11) adjacent to the battery positioning hole (11) to form an isosceles triangle, and respective one of the foams (3) all adjacent to three battery positioning holes (11) of the isosceles triangle is provided corresponding to a center point of the isosceles triangle.

10. The bottom protection plate supporting structure of claim 9, wherein the foam (3) and the battery positioning holes (11) all are cylindrical, and an outer peripheral surface of the foam (3) is tangential to an outer peripheral surface of each of the three battery positioning holes (11) adjacent to the foam (3).

11. The bottom protection plate supporting structure of any one of claims 5-10, wherein a ratio of a diameter of each of the foams (3) to an aperture of respective one of the battery positioning holes (11) is 2:3.

12. The bottom protection plate supporting structure of any one of claims 1-11, wherein the supporting plate (1) is disposed in parallel with the bottom protection plate (2).

13. The bottom protection plate supporting structure of any one of claims 1-12, wherein a material of each of the foams (3) is polyurethane or polyethylene.

14. A battery pack, comprising a battery module (4), a box body (5), a box cover (6), and the bottom protection plate supporting structure of any one of claims 1-13, wherein the bottom protection plate (2) is provided at a bottom of the box body (5), the battery module (4) and the supporting plate (1) are located in the box body (5), and the supporting plate (1) is located between the battery module (4) and the bottom protection plate (2); and the battery module (4) comprises batterys and a glue layer, wherein the glue layer wraps a side wall of each of the batterys, a pressure relief valve of the each of the batterys is opposite to corresponding one of the battery positioning holes of the supporting plate (11), and the box cover (6) is in sealed connection with the box body (5).

15. The battery pack of claim 14, wherein a side wall of the supporting plate (1) is disposed against an inner side wall of the box body (5).
